# EUROPEAN PATENT APPLICATION

(11) **EP 4 827 053 A1**
(43) Date of publication of application: **21.10.2026**
(21) Application number: 26171746.6
(22) Date of filing: 10.04.2026
(51) Int. Cl.: H04L 9/40, G06F 21/51

(54) **TECHNIQUES FOR DETECTING AND REPORTING ON CLONED WEBSITES**

(30) Priority: 17.04.2025 US 202563790380 P
(71) Applicant: Dynatrace LLC, Boston, Massachusetts 02210 (US)
(72) Inventor: KAHLHOFER, Mario, Linz (AT); REMPLBAUER, Philipp, Linz (AT)
(74) Representative: Steffens, Adrian

(57) **Abstract**

A computer-implemented method is provided for detecting cloned websites. The method includes: instrumenting a webpage with a detection agent, a token and a network address of an interested party; upon loading of the webpage, determining whether a current domain hosting the webpage matches an expected domain for the webpage (or a listing of expected domains for the webpage), where the expected domain is known to the detection agent; and sending an alert message across a network to the interested party, where the alert message includes the token and is sent in response to a mismatch between the current domain and the expected domain. The detection agent is computer-executable instructions (e.g., a script) that execute in response to loading of the webpage.

## Description

### Field

The present disclosure relates to techniques for detecting and reporting cloned websites.

### Background

Fraudulent actors typically use automated mechanisms to capture content of a website, like a bank website, and transfer the cloned content to a server controlled by them. The fraudulent actors in turn operate the cloned content in form of a trap for users, e.g., to steal identity and/or credential data from users. The stolen content is accessible from a URL that is different from the URL of the legit servers. Therefore, it is desirable to develop an automated technique for detecting and reporting cloned websites. Once a cloned website has been detected, it is further desired to collect pertinent information about the fraudulent actors which may be used, for example in connection with a takedown request in accordance with the Digital Millennium Copyright Act or similar legal standards.

This section provides background information related to the present disclosure which is not necessarily prior art.

### Summary

This section provides a general summary of the disclosure, and is not a comprehensive disclosure of its full scope or all of its features.

A method and a system are provided according to the independent claims. The dependent claims pertain to further embodiments of the method.

According to an aspect, a computer-implemented method is provided for detecting cloned websites. The method includes: instrumenting a webpage with a detection agent, a token and a network address of an interested party; upon loading of the webpage, determining whether a current domain hosting the webpage matches an expected domain for the webpage (or a domain on a listing of expected domains for the webpage), where the expected domain is known to the detection agent; and sending an alert message across a network to the interested party, where the alert message includes the token and is sent in response to a mismatch between the current domain and the expected domain. The detection agent is computer-executable instructions (e.g., a script) that execute in response to loading of the webpage.

According to another aspect, a data processing system comprises means for carrying out said method. In particular, the data processing system may comprise at least one processor configured to perform the steps of said method.

In one embodiment, instrumenting a webpage with a detection agent includes hiding the script in an image associated with the webpage. To do so, an image having a format that supports embedding scripts may be requested, where the request is formatted to enable the web browser to execute the embedded scripts.

In some embodiments, the alert message sent to the interested party is disguised. For example, the alert message is encrypted prior to sending the alert message. In another example, content of the alert message is embedded in a domain name and a lookup request for the domain name is sent to a domain name server. This lookup request may be disguised as a request to open a WebSocket connection. In response to receiving the lookup request, the alert message is extracted from the domain name.

During operation, the detection agent may collect information about the current domain and append this information to the alert message. For example, collecting information about the current domain includes determining a network address of a web browser executing the detection agent and appending the network address of the web browser to the alert message. In another example, the detection agent may capture a screenshot of the webpage and append the screenshot of the webpage to the alert message. Libraries like "html2canvas, or the Screen Capture API may be used by the detection agent to create a screenshot of the displayed webpage from within the web browse showing it. In yet another example, a backend service may determine an entity who registered the current domain and append information for the entity to the alert message.

In other implementation, the detection agent may be configured to receive a credential input by a user of the webpage and scramble characters comprising the credential before the credential is passed on by the webpage. The detection agent may also report the credentials to the interested party.

In an example embodiment, the alert message is sent to a serverless computer service provided by a cloud computing company.

In lieu of processing by the detection agent, processing can be moved to or performed by a backend service associated with the interested party or some affiliated service provider. For example, in response to receiving the alert message, a backend service can access the webpage and capture a screenshot of the webpage. In another example, the backend service queries logs of a domain name system. In yet another example, the backend service sends a command back to the detection agent, where the command causes the detection agent to deface the webpage.

The detection agent is a script.

Instrumenting a webpage with a detection agent may include hiding the script in an image associated with the webpage.

Hiding the script in an image may include requesting an image having a format that supports embedding scripts, where preferably the request is formatted to enable the web browser to execute the embedded scripts.

The method may further comprise disguising the alert message sent to the interested party.

Sending an alert message may include encrypting the alert message prior to sending the alert message. Sending an alert message may include opening a WebSocket connection. Sending an alert message may include embedding content of the alert message in a domain name and sending a lookup request for the domain name to a domain name server.

The method may further comprise receiving the lookup request for the domain name and/or, in response to receiving a/the lookup request, extracting the alert message from the domain name.

The method may comprises collecting, by the detection agent, information about the current domain and, preferably, appending the information to the alert message, where in particular collecting and, preferably, appending are in response to a mismatch between the current domain and the expected domain.

Collecting information about the current domain may include determining a network address of a web browser executing the detection agent and, preferably, appending the network address of the web browser to the alert message.

The method may comprise capturing, by the detection agent, a screenshot of the webpage and preferably appending the screenshot of the webpage to the alert message, where in particular capturing and preferably appending are in response to a mismatch between the current domain and the expected domain.

The method may further comprise receiving, by a backend service, the alert message and, preferably, in response to receiving the alert message, accessing the webpage and capturing a screenshot of the webpage by the backend service.

The method may comprise receiving, by a backend service, the alert message and, preferably, in response to receiving the alert message, querying logs of a domain name system by the backend service.

The method may comprise receiving, by a backend service, the alert message and, preferably, in response to receiving the alert message, sending a command to the detection agent, where the command causes the detection agent to deface the webpage.

The method may comprise determining, by the backend service, an entity who registered the current domain and, preferably, appending information for the entity to the alert message, where in particular determining and preferably appending are in response to a mismatch between the current domain and the expected domain.

The method may further comprise sending the alert message to a serverless computer service, preferably provided by a cloud computing provider.

The method may further comprise receiving, by the detection agent, a credential input by a user of the webpage; and preferably scrambling characters comprising the credential before the credential is passed on by the webpage.

The method may comprise receiving, by the detection agent, a credential input by a user of the webpage; and preferably reporting the credentials to the interested party.

Determining whether a current domain hosting the webpage matches an expected domain for the webpage may include checking the current domain against a listing of expected domains for the webpage and, preferably, sending the alert message in response to the absence of the current domain on the listing of expected domains.

Instrumenting the webpage with the detection agent may further include determining the expected domain from a header field of a request for the webpage.

In an example, a system for detecting cloned websites comprises: an injection agent comprised of computer-executable instructions and configured to instrument a webpage with a detection agent, a token and a network address of an interested party, where the detection agent is a script that executes in response to loading of the webpage; upon loading of the webpage, the detection agent determines whether a current domain hosting the webpage matches an expected domain for the webpage, where the expected domain is known to the detection agent; and sends an alert message across a network to the interested party, where the alert message includes the token and is sent in response to a mismatch between the current domain and the expected domain; and a backend service associated with the interested party, wherein the backend service is configured to receive the alert message and, in response to receiving the alert message, access the webpage and capture a screenshot of the webpage.

The embodiments described above in connection with the method for detecting cloned websites may be provided correspondingly for the data processing system.

Further areas of applicability will become apparent from the description provided herein. The description and specific examples in this summary are intended for purposes of illustration only and are not intended to limit the scope of the present disclosure.

### Brief description of the drawings

The drawings described herein are for illustrative purposes only of selected embodiments and not all possible implementations, and are not intended to limit the scope of the present disclosure.
- Fig. 1: is a diagram depicting a method for detecting and reporting fraudulently cloned websites.
- Fig. 2: is a diagram showing the injection of a detection agent into a web page by a web server.
- Fig. 3: depicts an example alert message as generated by a detection agent and as processed and stored by a receiving service.
- Figs. 4A and 4B: are a flowchart and a diagram, respectively, showing token generation.
- Fig. 5: is a flowchart showing how to disguise an alert message in a DNS lookup request.
- Fig. 6: is a flowchart showing additional processing of an alert message.
- Fig. 7: is a diagram depicting an example distributed computing environment.
- Fig. 8: depicts an example data record for a captured website snapshot.

Corresponding reference numerals indicate corresponding parts throughout the several views of the drawings.

### Detailed description

Example embodiments will now be described more fully with reference to the accompanying drawings.

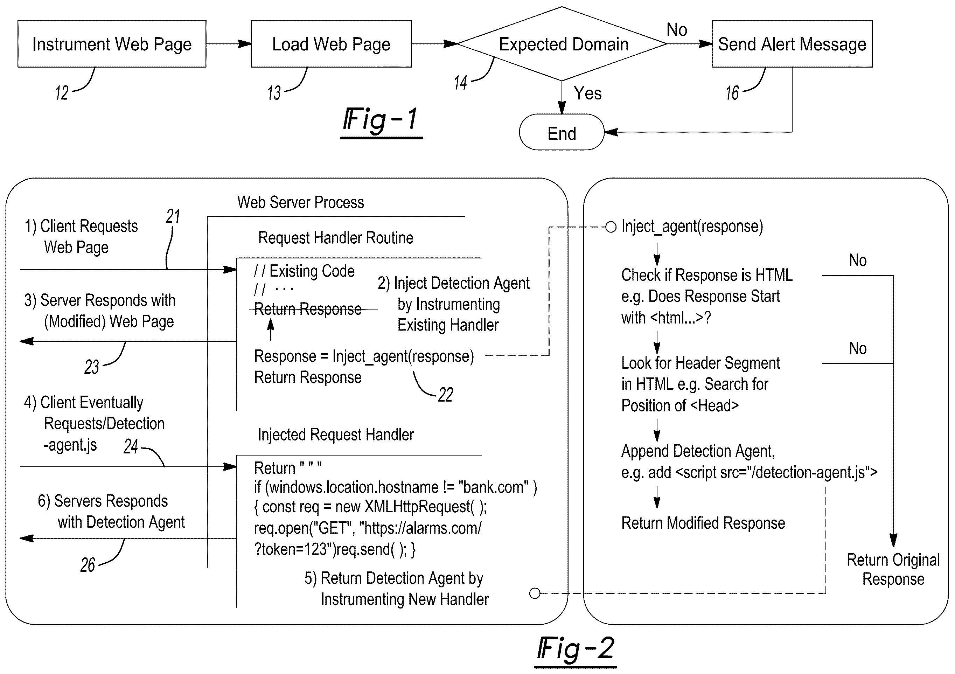

Figure 1 provides an overview of a computer-implemented method for detecting and reporting on fraudulently cloned websites. As a starting point, one or more webpages of interest are instrumented with a detection agent at 12, where the detection agent is computer-executable instructions that execute in response to loading 13 of the webpage. In an example embodiment, the detection agent is a script. In addition to the detection agent, the website is instrumented with an authentication or cryptographic token, and a network address for an interested party. The token and the network address may be used to configure the detection agent.

Detection agent injection is performed in a way to ensure the detection agent is the first resource which is loaded and interpreted by the browser. This may be achieved by injecting the detection agent at the position of the content which is loaded and interpreted by the browser before all other parts of the content are loaded and interpreted. With reference to Figure 2, an example technique for injecting a detection agent into a web page by a web server is described. First, a client requests a web page of interest at 21. In this example, the detection agent is instrumented into the requested web page by an existing handler into which an agent injection function (see inject_agent(response) is instrumented as indicated at 22 and the web server responds to the client request with the modified web page at 23.

Placing the detection agent at the beginning of the requested content has the advantage that the detection agent can quickly check the domain which serves the requested web page, but it also has the disadvantage that the detection agent may be easily detectable by a web site cloner and therefore be removed before the cloned web site is operated. Other placement strategies for the detection agent, which place it at less prominent locations of the requested content may be applied. Those strategies may identify valid locations within the requested content for placing the detection agent (e.g., for HTML, after a tag is closed and before the </body> tag) and then randomly select one of those.

Detection agent injection may be performed by an "on the fly" injector agent, which may be attached to the content which is currently created and which may be notified if the content is updated. On each notified update, the injector agent may check if the earliest detection agent injection position was already written to the content and then insert injection data (e.g. a resource link to load the detection agent) to the content. Additionally, the injector agent may detect if a detection agent should be injected into the content or not. This injector agent provides a way to inject the detection agent which does not influence the overall functionality and performance of the request handling and the web server/browser communication, because the injection does not require parsing the whole content, which would prohibit sending parts of content to the browser as they are created, which has great impact on the performance of web-based applications.

For HTML based content, injection may be directly after the first occurrence of the tag "<HEAD>" which indicates the start of the HTML header, and also the first position which allows referring resources like scripts. For HTML content, the detection agent may be appended, for example by adding <script src="/detection-agent.js"> as seen on the right side of Figure 2. In this example, when a user accesses the webpage, the web browser sends a request for the script to the web server as indicated at 24. The requested script is in turn retrieved and sent to the web browser by the web server at 26. In an alternative implementation, the instructions contained in the script are inserted into the HTML content in lieu of the reference to the script, thereby avoiding the need to retrieve the script when the user accesses the webpage. Further details regarding agent injection may be found in U.S. Patent No. 9,571,591 which is incorporated in its entirety by reference.

In some embodiments, instrumenting a webpage with a detection agent includes hiding the script in an image associated with the webpage. The image preferably has a format that supports embedding scripts. For example, JavaScript code may be embedded in an image with a scalable vector graphics (SVG) format and wrapped in an <object> tag which will instruct the browser to execute the embedded JavaScript. Other types of image formats and scripting languages are contemplated by this disclosure.

Upon loading of a given webpage instrumented with a detection agent, the detection agent determines whether a current domain hosting the webpage matches an expected domain for the webpage at 14 (Fig. 1). In one embodiment, the expected domain is known to the detection agent and thus hardcoded into the script. In another embodiment, the expected domain is determined at the time the detection agent is instrumented into a (HTTP) request handler by the injection agent. The injection agent may, on receipt of a request for web page look up the host name from the request (e.g., in header field of HTTP request) and insert the host name as the expected domain in the script. This way, no user specified configuration is required for the placement of a detection agent because the expected domain is automatically determined by the injection agent, and also other configuration items required by the detection agent, like the security token, can be generated automatically. In an ideal case, the only configuration effort for a web site owner to enable identification and reporting of cloned web sites would be to switch this feature on.

An example of an injected script is as follows.

```
 if (window.location.hostname != "bank.com") {
 const req = new XMLHttpRequest();
 req.open("GET", https://dt-alarms.amazonaws.com/?token=123);
 req.send();
 }
```

In this example, bank.com is the expected domain and an alert message is sent to a serverless computer service hosted by a cloud computing company, such as Amazon Web Services. The above implementation merely describes one particular embodiment that has proven effective and should be viewed as illustrating, rather than limiting, the present invention.

Assume the expected domain is "bank.com" but the site was found to be accessed via "clone.com" instead. Different matching schemes may be employed by the detection agent. In one example, a canonical domain name is built by simply adding a dot to the start and the end of the expected domain and the current domain (if no dot exists) so that all parts of the domain are properly terminated.

| | |
|---|---|
| expected domain: | .bank.com. |
| current domain: | .clone.com. |

To identify a malicious clone, check if the current domain does not end with the expected domain. A few examples of mismatched and thus malicious clones include:
".clone.com." does NOT end in ".bank.com."
".login.clone.com." does NOT end in ".bank.com."

Conversely, a few examples of valid sites (no clones) include:
".bank.com." does end in ".bank.com."
".sso.bank.com." does end in ".bank.com."
".some.random.subsite.bank.com." does end in ".bank.com."

One example that illustrates why adding a dot to the start of the domain is crucial to detect mismatched and thus malicious clones includes:
".evilbank.com." does NOT end in ".bank.com." (note the dots)
("evilbank.com." would however end in "bank.com" which would lead to an incorrect domain-match assessment)

One example that illustrates why adding a dot to the end of the domain is crucial to avoid misclassifying of valid sites (no clones) include: Web browsers allow accessing "bank.com." (note the trailing dot), so simply checking if "bank.com." does end in "bank.com" would result in a false positive.

In another example, the current domain is checked against a listing of expected domains and the alert message is sent in response to the absence of the current domain on the listing of expected domains. For illustration purposes, assume the expected domain is either "bank1.com" or "bank2.com", and the site was found to be accessed via "clone.com". Because "clone.com" does not end with either of the expected domains, it is an example of a malicious clone. On the other hand, assume that the current domain is "bank1.com". In this case, because the current domain ends with one of the expected domains, i.e., "bank1.com", a valid site was accessed and no alert message is sent.

With continued reference to Figure 1 and in response to a mismatch between the current domain and the expected domain, an alert message is sent at 16 by the detection agent across a network to the interested party using the network address instrumented in the webpage. In one example, the alert message is sent as a string in the payload of an XMLHttpRequest to a receiving service of the interested party. In an alternative, the alert message may be sent to the receiving service of the interested party by opening a WebSocket. In both cases, the alert message may not be sent in form of a payload string but instead be inserted into a DNS request contained in the client-side processing of the XMLHttpRequest or WebSocket request.

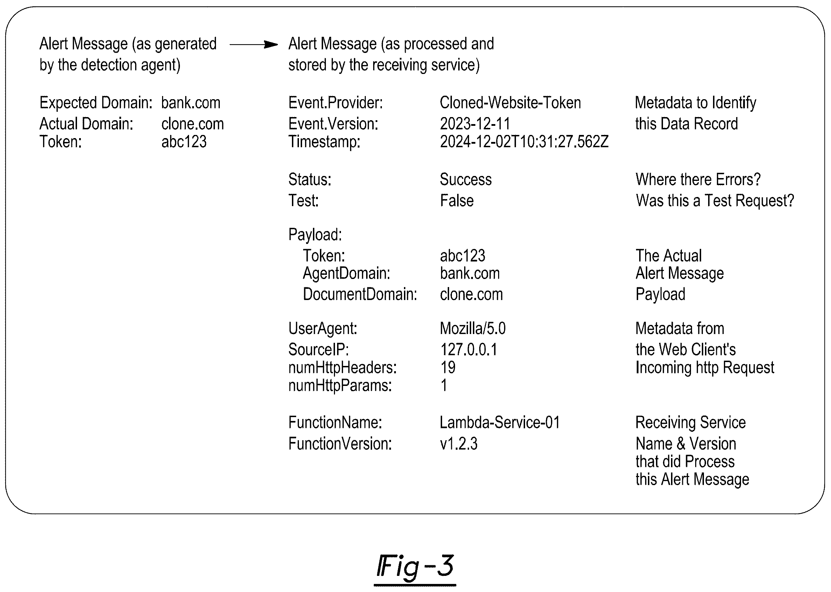

An example alert message as generated by the detection agent is shown in left side of Figure 3. In this example, the alert message includes the expected domain, the actual domain, and a token. After processing and storing by a receiving service, the same alert message is shown on the right side of Figure 3. Here, metadata has been added to the stored message, including but not limited to metadata to identify the data record, metadata from the web browser, and metadata for the receiving service (i.e., lambda-service-01 in this example). Other types of metadata may also be appended to the stored message.

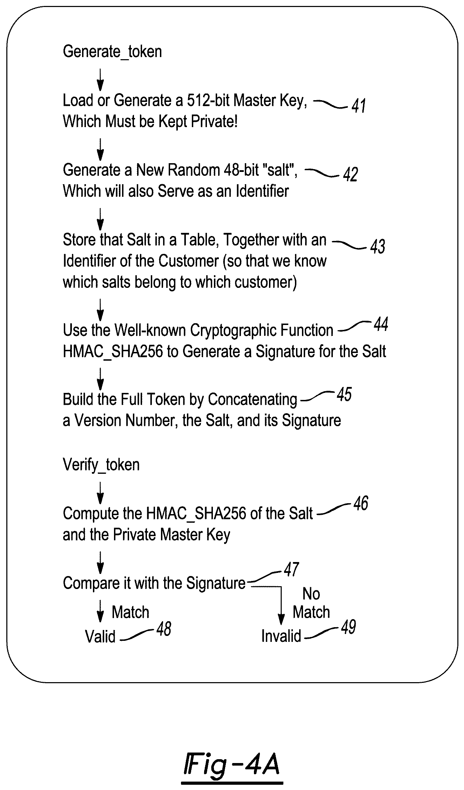

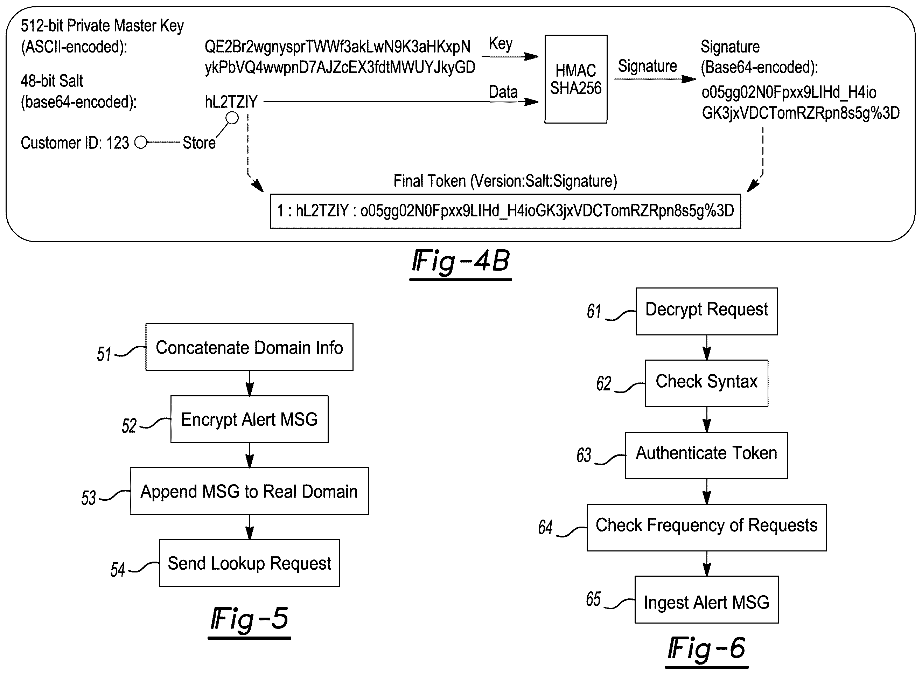

To verify its authenticity and origin, the alert message preferably includes a token instrumented in the webpage. In the example embodiment, the token is generated as seen in function "Generate_token" of Figure 4A. A master key (e.g., 512 bit) is first loaded or generated at 41 by the web server. A salt (e.g., 48 bit) is randomly generated at 42. The salt will serve as an identifier for the entity associated with the website. The salt, along with an identifier of the entity, is in turn stored at 43 in a table. It is envisioned that there may be multiple salt values for a given entity. The salt is appended to the master key and a hash function (e.g., HMAC-SHA256) is applied at 44 to generate a signature for the entity as further shown in Figure 4B. Lastly, a token is constructed at 45 by concatenating a version number, the salt and the signature together. In this way, the token can be used to identify the entity in alert messages without disclosing identifying information for the entity to third parties. For the sake of completeness, also verification of the integrity of a so generated token is shown in function "Verify_token" of FIG. 4A. This function is executed by a receiver of a token and starts with step 46 with the computation of a HMAC_SHA256 hash of the salt contained in a received token using the private master key. The resulting hash code is then compared with the signature for the salt that was received with the token in step 47. A valid token is indicated in step 48 if received signature and calculated hash code match. Otherwise, an invalid token is indicated in step 49.

Prior to sending the alert message, the detection agent may collect additional information and append that information to the alert message. For example, the detection agent may collect information about the active/current browser session, such as a network address of web browser executing the detection agent, and append the information to the alert message. Alternatively or additionally, the detection agent may capture a screenshot of the webpage and append the screenshot of the webpage to the alert message. It is envisioned that other types of information may also be collected and appended to the alert message, including but not limited to collecting evidence useful for take-down requests of the cloned website.

In some embodiments, the detection agent may intercept credentials input by a user of the webpage and scramble characters comprising the credential before the credential is passed on by the webpage, thereby thwarting the attempt to fraudulently obtain the user's credentials. As an example for HTML content, detection agent variants may be added as submit handlers to interaction elements like forms that send user provided data from the browser. This detection agent variants may first determine if the current domain indicates a cloned web site, and in this case identify, capture and scramble credential data before sending the form, and optionally sending an alert message containing captured credential data to the interested party.

Different techniques may be employed to disguise the alert message sent to the interested party. For example, an alert message may be encrypted by the detection agent prior to the alert message being sent. In another example, content of an alert message is embedded in a domain name and a lookup request for the domain name is sent to a domain name server. For illustration purposes, nslookup can be used to make a lookup request as seen in Figure 5. An example lookup request and response might look as follows:
$ nslookup alerts.dynatrace.com
Server: dns.google
Address: 8.8.8.8

Non-authoritative answer:
Name: dynatrace.com
Addresses: 52.58.89.188
   3.77.197.200
   18.185.196.40

The lookup request gets routed through multiple domain name servers (DNS servers). One would start the request at a root server, then the root server would send a request to a ".com" DNS server. There may be additional servers until the request is sent to a DNS server owned by the interested party (e.g., Dynatrace). In this way, the lookup request is received by the interested party. Because the domain name (i.e., alerts.dynatrace.com) is not recognized, the DNS server will respond with a failed request. To the bad actor, the lookup request appears to be a failed network request but in fact the encoded alert message has reached the interested party.

An example for embedding the alert message in the domain name is also provided.

| | |
|---|---|
| expected domain: | bank.com |
| actual domain: | clone.com |
| token: | abc123 |

The alert message is constructed at 51 by concatenating these three parts with a delimiter:
bank.com-clone.com-abc123

Optionally, a Caesar cipher or another encryption method may be applied at 52 to the constructed string, thereby further disguising the content of the lookup request. For example, replace A with H, replace B with I, replace C with J, and so on results in
ihur.jvt-jsvul.jvt-hij123

Appending this string with domain name for the interested party at 53 yields
ihur.jvt-jsvul.jvt-hij123.alerts.dynatrace.com

Finally, the domain lookup request is sent at 54. Sending the domain lookup request may be performed in multiple ways. In one example an XMLHttpRequest may be sent to the created domain, and in another example, a request to open a WebSocket may be sent to the created domain. In both cases, a domain lookup request will be sent in the initial phase of the communication. Due to the hierarchical architecture of the domain name resolving service, this request will first be sent to root DNS server responsible for the "com" domain, which forward the DNS request to a DNS server responsible for the domain "dynatrace.com", which will forward the request to the DNS server responsible for the domain "alerts.dynatrace.com". This ""alerts.dynatrace.com" then analyzes the DNS request and responds with an error message indicating a failed request. Although above description of the DNS service is incomplete and simplified, it shows the important feature of the DNS service system that by specifying a domain name (i.e., "alerts.dynatrace.com"), a domain lookup request can be directed to a specific DNS server (i.e., the DNS server serving the domain "alerts.dynatrace.com"). This specific DNS server may the configured to, in addition to providing DNS services, also perform other tasks, like extracting alert messages from received domain lookup requests and sending those alerting messages to an interested party. Because the domain name is not recognized, the DNS server will respond with a failed request. In the case of the XMLHttpRequest, the web browser will log an alert with the console showing the domain that failed to resolve. Conversely, in the case of the WebSocket, the web browser will log an alert with the console but it will not show the domain that failed to resolve. In this way, the WebSocket approach is advantageous.

In response to receiving the lookup request, the DNS server may also initiate a request for additional processing of the alert message by a separate and distinct backend service. Referring to Figure 6, the lookup request is first decrypted at 61, such that the field comprising the alert message can be extracted from the lookup request. The syntax of the fields can be checked at 62, for example using a regular expression. Next, the authenticity of the token is verified at 63. Further verification may be performed by ensuring that the number of lookup requests per token and IP address falls within predefined limits as indicated at 64. Assuming the message content passes each check, the alert message can be passed on at 65 to an external alert management tool. It is noteworthy that the processing steps described in Figure 6 may also be performed for alert messages that are received in form of XMLHttpRequest payload data or via a WebSocket connection.

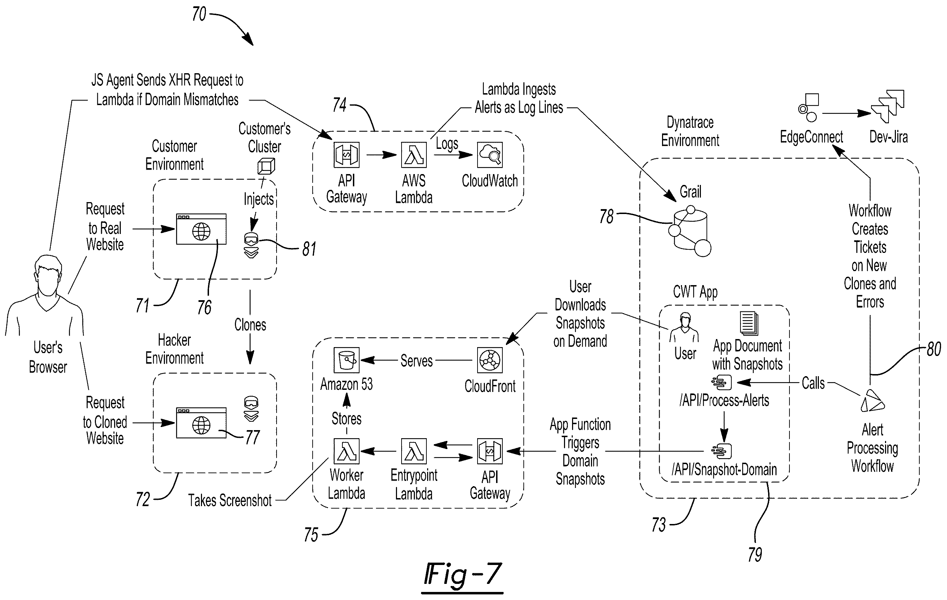

Figure 7 depicts an example of a distributed computing environment 70 for implementing the detection scheme described above. The computing environment includes a customer environment 71, a hacker's environment 72, an environment for the interested party 73, such as an application performance and security monitoring provider like Dynatrace, and one or more serverless computer services 74, 75 provided by a cloud computing company, such as Amazon Web Services. The serverless computer services may also be provided by and/or associated with the interested party. It is understood that the components relevant to the detection scheme are shown.

In this example, the Dynatrace environment 73 is the source for the detection agent 81 and other components instrumented into the content of a customer's website. The detection agent 81 can be injected into a webpage as described above. The customer's environment 71 includes the customers website 76, where one or more monitored webpages comprising the website are instrumented with the detection agent 81. The webpages are in turn accessed via a web browser by an end user. Other components of the backend environment 73 include a storage for alerts indicating cloned websites (the Grail storage component 78), an application 79 providing user interfaces to review stored alerts and to interact with serverless computer service 75 to create and download screenshots from cloned websites, and workflow configurations 80 for the automatic creation of work management tickets to implement an track counter measures for alerts.

Similarly, the hacker environment 72 includes a website 77 cloned from the customer. Because the webpages were copied from the customer, they will contain the injected detection agent 81. When the instrumented webpages on the cloned website are accessed by the end user, the detection agent 81 is executed in response to the loading of an instrumented webpage and the detection described above is implemented.

In one embodiment, alert message is sent by a detection agent in a cloned webpage directly to the computing environment 73 of the interested party. In a more robust embodiment, the alert messages are sent as a request (e.g., an XHR request) to a serverless computer service 74 hosted by a cloud computing company. The serverless computer service receives and logs the request from the detection agent. Logged information may include but is not limited to a timestamp, a source identifier, a user agent, the token, the current domain, and the expected domain. A Lambda function from AWS is an example serverless computer service although other types of such services fall within the scope of this disclosure. The alert message is stored in the logs of the serverless computer service and later queried by a backend service. In another embodiment, the alert message is in turn passed on to a backend service residing in the computing environment 73 of the interested party.

To mitigate abuse of any of the computing environments 73, 74 various technical installments are added, including, a limit on the number of concurrent alerts per second that can be received, a limit on the number of alerts that can be received per source network address and per expected domain per 24 hours, rejection of alerts of invalid format or invalid token signature. The following example shows how the security token that is included in alerts is constructed and verified. A 512-bits (64 bytes) data sequence, which represents the so-called master key, is maintained privately. To create a new token, another random 48-bits (6 bytes) long data sequence is generated and commonly referred to as the "salt". The following is an example master key and salt, where the master key is ASCII-encoded and the random salt is base64 encoded:
master key:
QE2Br2wgnysprTWWf3akLwN9K3aHKxpNykPbVQ4wwpnD7AJZcEX3fdtMWUYJkyGD random salt: hL2TZIYi

The random salt is the part that will identify the full token. To verify its integrity, sign it without disclosing the master key. This can be achieved by computing the HMAC-SHA256 hash function of the salt (with the known master key). For the example above, the signature, encoded as bas64 is:
signature: o05gg02N0Fpxx9LIHd_H4ioGK3jxVDCTomRZRpn8s5g%3D

The full token is built by concatenating a field that indicates the version of the token, the salt, and the signature. Assuming that the version is 1, the resulting token is 1:hL2TZIYi:o05gg02N0Fpxx9LIHd_H4ioGK3jxVDCTomRZRpn8s5g%3D

Upon receiving this token, the signature is verified by computing it again for the given salt, and the master key, which is not publicly known, and checking if the computation results in the same signature. If they do, the token is valid.

Upon receiving the alert message, the backend service may perform additional functions. For example, the backend service may query logs of a domain name system to determine information about the entity associated with the current domain, i.e., the hacker environment 72. In another example, the backend service may access the clone webpage and capture a screenshot of the webpage.

It is desirable to decouple receipt and recording of an alert message from the gathering of additional evidence data for the observed fraudulent usage of cloned data. First, the request that was used to transmit the alert message should be terminated with a corresponding response as quickly as possible to avoid drawing cloner's attention to this communication activity. Therefore, subsequent activities to gather additional evidence data, like capturing screenshots or HTML code of cloned web sites or requesting registration information for the domain name that serves the cloned web site, should be performed asynchronously from receipt and processing of alert messages. As an example, received messages may be transformed into alert records which are inserted into a processing queue. Worker tasks may then asynchronously access the alert records in the queue to perform requests for additional evidence data like site screenshots or domain ownership data and to enrich alert records with this additional evidence data. Various processing architectures may be employed for this purpose, including one process that manages alert message receipt, processing queue, scheduling of worker tasks and storage of enriched alert records, or distributed processing approaches, where one process is responsible for receiving alert messages and creating corresponding alert records, which are transferred to a second process which manages the processing queue, spawns separate processes to execute evidence collecting tasks and stores evidence-data enriched alert records.

As one example for gathering evidence data in form of web page screenshots, the backend service may start a headless instance of a web browser such as Chromium, which accesses the cloned webpage and waits for the cloned webpage to fully load all content. After all content is loaded, the backend service may instruct the headless instance to store the active page as an image. Captured information may include but is not limited to html source code, page screenshot, WHOIS lookup data and RDAP lookup data. This information is gathered asynchronously, i.e., the backend service comprises various services to capture the above information. The backend service requests jobs from these services, which the services put in a worker queue and process one after another. If a service fails to capture some information, it will retry capturing at some later point in time. The backend service may also request data collection at regular intervals, e.g., taking a screenshot of the cloned website every 24 hours to archive the evolution of the cloned website over longer time periods.

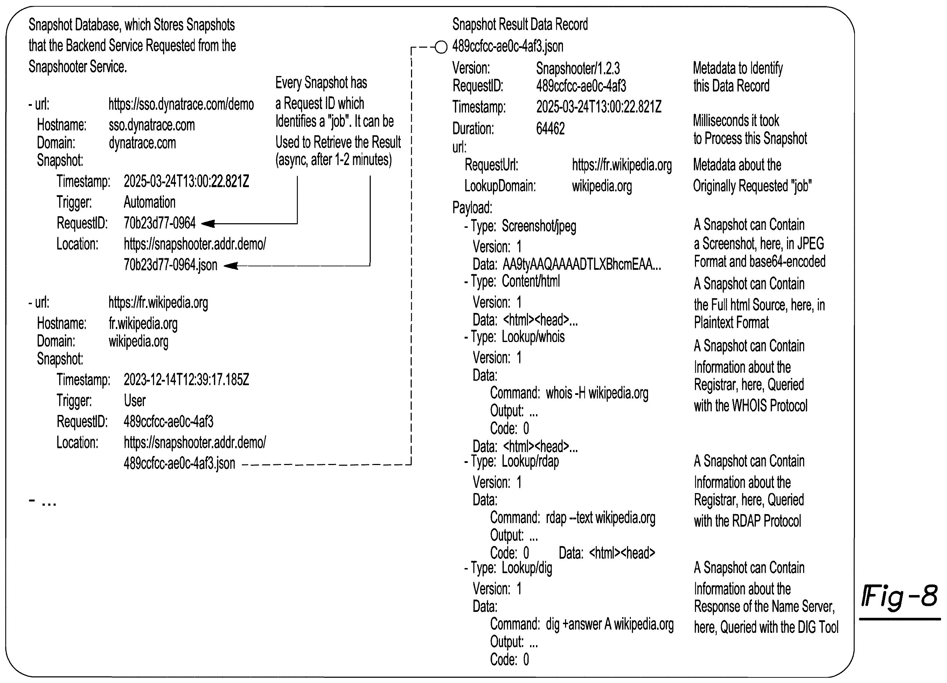

Figure 8 illustrates an example data structure for storing additional evidence data for identified cloned web sites, including a captured screenshot of the web site, HTML source code of the web site, or domain ownership data for the domain name that is used to serve the cloned web site. In this example, a first data record on the left side records metadata for the screenshot capture, including a reference to a secondary data record. The secondary record on the right side contains the detail information for the captured screenshot (see entry "Type: Screenshot/jpeg" of the "Payload" section). It is understood that this data could also be combined into a single data record. In this example, the detail information further contains captured HTML content (entry "Type: Content/html"), and the result of a "WHOIS" request (entry "Type: Lookup/whois"), the result for a RDAP request (entry "Type: Lookup/rdap), and the result of a DIG request (entry "Type: Lookup/dig") for the coned website. This data structure may also be enriched with usage statistic data for the identified cloned web site, based on the number of alerts that are received for the cloned web site. This statistical data may be used to prioritize identified cloned web sites by addressing those clones with highest traffic first. In addition, this data structure may, if the detection agent also captures and sends identification data for victims of cloned web sites, e.g., in form of usernames, login names or email addresses of those victims, be enhanced with data storing lists of those victim identification data. This victim identification data may then be used for targeted communication with those victims by e.g., requesting them to change their passwords.

Upon receiving the alert message, the backend service may also forward the alert to a centralized alert management system. One example includes the Jira project management system, where the backend service uses the Jira API to create a ticket on this incident, append all collected evidence, and assign the ticket to a pre-defined person or team user. Another example includes the Slack communication system, where the backend service uses the Slack API to post a message to a channel so that the security team can read and act on this incident.

In yet another example, the backend service may send a command to the detection agent, where the command causes the detection agent to deface the webpage. Assume the detection agent detects a cloned website "clone.com" of "bank.com". Upon receiving an alert message, the backend service may send a simple text command, such as DEFACE back the detection agent. The detection agent in turn defaces the website. Defacing is understood to mean making the site useless or making the site blank. Since the detection agent has full control over the site it is injected into, it can simply remove all the HTML source code, which effectively renders the entire website blank. Technically, the defacing function may be implemented by executing this piece of code, which replaces the HTML of the page with the empty string, i.e., document.body.innerHTML = "". Other technique for defacing or disabling the cloned website are also contemplated by this disclosure. Sending the text command from the backend service to the detection agent may be performed by adding the text for the command to a response that is sent from the backend service to the detection agent on receipt of a notification for a detected clone web site. This may include encapsulating the command text into a HTTP response body that is sent in response to the receipt of a XMLHttpRequest that notified a detected cloned website. For WebSocket based alert communication, a polling mechanism may be established on which the detection agent periodically checks for commands.

Lastly, the backend service may be configured to prepare and send a takedown request to applicable service providers in accordance with DMCA or other similar legal standards. The takedown request may include information collected by the detection agent or by the backend service in response to receiving an alert message. This data is typically forwarded to an authority that can issue a domain take-down. The first stage is the webmaster of the server where the cloned website operates. The webmaster can be identified by the information that was collected from the domain registration service. If the webmaster is unresponsive or not identifiable, one can reach out to the domain registrar and file an abuse report, which will either result in them directly taking down the domain, or them forwarding contact information about the owner. If the domain registrar is not willing to take down the domain, one would forward the contact information of the server's owner along with the collected evidence to a local attorney who can follow up with legal action against the server's owner.

The techniques described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

Some portions of the above description present the techniques described herein in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times to refer to these arrangements of operations as modules or by functional names, without loss of generality.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the described techniques include process steps and instructions described herein in the form of an algorithm. It should be noted that the described process steps and instructions could be embodied in software, firmware or hardware, and when embodied in software, could be downloaded to reside on and be operated from different platforms used by real time network operating systems.

The present disclosure also relates to an apparatus for performing the operations herein. This apparatus may be specially constructed for the required purposes, or it may comprise a computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various systems may also be used with programs in accordance with the teachings herein, or it may prove convenient to construct more specialized apparatuses to perform the required method steps. The required structure for a variety of these systems will be apparent to those of skill in the art, along with equivalent variations. In addition, the present disclosure is not described with reference to any particular programming language. It is appreciated that a variety of programming languages may be used to implement the teachings of the present disclosure as described herein.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A computer-implemented method for detecting cloned websites, comprising:
- instrumenting a webpage with a detection agent, a token and a network address of an interested party, where the detection agent is computer-executable instructions that execute in response to loading of the webpage;
- upon loading of the webpage, determining, by the detection agent, whether a current domain hosting the webpage matches an expected domain for the webpage, where the expected domain is known to the detection agent; and
- sending, by the detection agent, an alert message across a network to the interested party, where the alert message includes the token and is sent in response to a mismatch between the current domain and the expected domain.

2. The method of claim 1, wherein the detection agent is a script and instrumenting a webpage with a detection agent includes hiding the script in an image associated with the webpage, wherein hiding the script in an image includes requesting an image having a format the supports embedding scripts, where the request is formatted to enable the web browser to execute the embedded scripts.

3. The method of claim 1 or 2, wherein sending an alert message includes encrypting the alert message prior to sending the alert message and/or includes opening a WebSocket connection.

4. The method of any one of the preceding claims, wherein sending an alert message includes embedding content of the alert message in a domain name, sending a lookup request for the domain name to a domain name server, and receiving, by the domain name server, the lookup request for the domain name and, in response to receiving the lookup request, extract the alert message from the domain name.

5. The method of any one of the preceding claims further comprises collecting, by the detection agent, information about the current domain and appending the information to the alert message, where collecting and appending are in response to a mismatch between the current domain and the expected domain.

6. The method of claim 5, wherein collecting information about the current domain includes determining a network address of a web browser executing the detection agent and appending the network address of the web browser to the alert message.

7. The method of any one of the preceding claims further comprises capturing, by the detection agent, a screenshot of the webpage and appending the screenshot of the webpage to the alert message, where capturing and appending are in response to a mismatch between the current domain and the expected domain.

8. The method of any one of the preceding claims further comprises receiving, by a backend service, the alert message and, in response to receiving the alert message, accessing the webpage and capturing a screenshot of the webpage by the backend service.

9. The method of any one of the preceding claims further comprises receiving, by a backend service, the alert message and, in response to receiving the alert message, querying logs of a domain name system by the backend service.

10. The method of any one of the preceding claims further comprises receiving, by a backend service, the alert message and, in response to receiving the alert message, sending a command to the detection agent, where the command causes the detection agent to deface the webpage.

11. The method of any one of the preceding claims further comprises determining, by the detection agent, an entity who registered the current domain and appending information for the entity to the alert message, where determining and appending are in response to a mismatch between the current domain and the expected domain.

12. The method of any one of the preceding claims further comprises receiving, by the detection agent, a credential input by a user of the webpage; and scrambling characters comprising the credential before the credential is passed on by the webpage.

13. The method of any one of the preceding claims further comprises receiving, by the detection agent, a credential input by a user of the webpage; and reporting the credentials to the interested party.

14. The method of any one of the preceding claims, wherein determining whether a current domain hosting the webpage matches an expected domain for the webpage includes checking the current domain against a listing of expected domains for the webpage and sending the alert message in response to the absence of the expected domain on the listing of expected domains.

15. A data processing system comprising means for carrying out the method of any one of the preceding claims.
